# EUROPEAN PATENT SPECIFICATION

(11) **EP 2 997 178 B1**
(45) Date of publication and mention of the grant of the patent: **29.06.2022**
(21) Application number: 14725417.1
(22) Date of filing: 16.05.2014
(51) Int. Cl.: C23C 24/04

(54) **A METHOD FOR TREATING A COMPONENT TO PREVENT EROSION OF SUCH COMPONENT**
VERFAHREN ZUR BEHANDLUNG EINER KOMPONENTE ZWECKS VERHINDERUNG DER EROSION DIESER KOMPONENTE
PROCÉDÉ DE TRAITEMENT D'UN COMPOSANT POUR PRÉVENIR L'ÉROSION D'UN TEL COMPOSANT

(30) Priority: 17.05.2013 IT CO20130018
(43) Date of publication of application: 23.03.2016
(73) Proprietor: Nuovo Pignone Tecnologie - S.r.l., 50127 Florence (IT)
(72) Inventor: GIANNOZZI, Massimo, I-FI 50127 Florence (IT); BELLACCI, Michelangelo, I-FI 50127 Florence (IT); COSI, Lorenzo, I-FI 50127 Florence (IT); GIOVANNETTI, Iacopo, I-FI 50127 Florence (IT)
(74) Representative: Novagraaf Group
(86) International application number: PCT/EP2014/060128
(87) International publication number: WO 2014/184363

(56) References cited:
- EP-A1- 1 398 394
- EP-A1- 2 175 050
- EP-A2- 1 263 006
- EP-A2- 1 705 266
- WO-A1-2005/061116
- WO-A1-2011/052751
- WO-A1-2013/149291

## Description

### TECHNICAL FIELD

The present invention relates to method for treating the surface of a component subject to erosion by liquids or due to cavitation phenomena.

### BACKGROUND ART

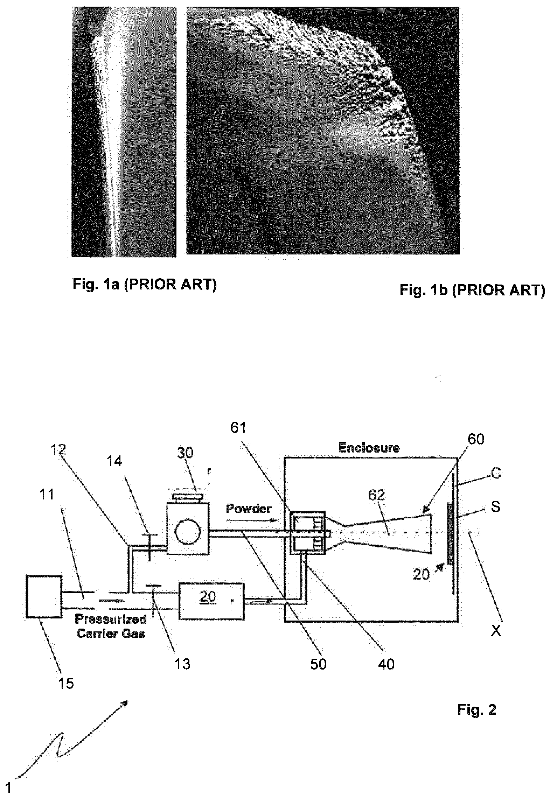

It is well known to apply a wear alloy coating to the surface of a substrate material in order to improve its resistance to erosion. For components of rotating machines like steam turbines, centrifugal and axial compressors, pumps and other rotating machines, it is particularly important to exhibit a sufficient degree of resistance to liquid droplet erosion or erosion deriving from cavitation phenomena. For example, in steam turbines, liquid droplet erosion typically occurs along the leading edge of blades (Figure 1).

Known methods for applying erosion resistant coating to such surfaces include: surface hardening, laser cladding, brazing, and welding.

The above technologies typically involve heat input to the substrate material, which typically determines the following inconveniencies: presence of a heat affected zone which could make the component not compliant with NACE standards, distortion of the coated component, need for post heating treatments, cracks, iron dilution in the coating, and inhomogeneous microstructure.

In addition, the above technologies cannot be used to deposit a coating including non-weldable materials.

EP 1 398 394 describes a method and an apparatus for treating the surface of a component of a rotating machine, like an airfoil or a shroud of a gas turbine using a high velocity spray process. The apparatus comprises a high-pressure source of an inert carrier gas, like helium, a gas preheater, a powder particle feeder and a spray gun having a mixing chamber and a supersonic nozzle. A first portion of the inert gas is supplied to the preheater in which the gas is heated up to a temperature well below the melting point of the particles of a powdered nickel or cobalt base superalloy alloy, typically comprising a temperature in the range of 100 to 800 °C. A second portion of the inert gas is supplied to the powder particle feeder in which the powder material is metered and mixed with the second portion of the inert gas. The preheated first portion of the inert gas and the second portion of the inert gas which carries the powder material is fed independently from each other to the mixing chamber of the spray gun. The resulting mixture of the compressed inert gas and the powder particles are flowed through a supersonic nozzle in order to generate a supersonic jet stream which impinges the surface of an unheated substrate to deposit an overlay coating which improves the wear resistance of the substrate with respect to hot corrosion and oxidation.

EP 1 705 266 and EP 2 175 050 each describe a further high velocity spray method for treating the surface of a component of a rotating machine, such as a turbine blade or a combustion chamber liner, used in a gas turbine.

WO 2005/061116 describes a high velocity spray method in which a ceramic spray powder is preheated in order to improve the deposition rate of the ceramic powder on the surface of a target to be coated.

A further high velocity spray method is described in EP 1 263 006. The described method is used for manufacturing a permanent magnet.

WO 2011/052751 A1 discloses a cold spray device.

It would be therefore desirable to provide an improved method for treating a surface of a component which could avoid the inconveniences above.

### SUMMARY

According to a first embodiment, the present invention accomplishes such an object by providing a method of claim 1.

The solution of the present invention allows to deposit a coating on a surface of a substrate material in order to improve its resistance to erosion. In the coating thus created, the following mechanical properties can be achieved: Hardness (Vickers): 400<HV<1000, and Porosity: < 2%.

### BRIEF DESCRIPTION OF THE DRAWINGS

Other object feature and advantages of the present invention will become evident from the following description of the embodiments of the invention taken in conjunction with the following drawings, wherein:
Figures 1a-b are two different views of a component according to the prior art, subject to liquid droplet erosion;
Figure 2 is a schematic diagram showing an apparatus for performing the method according to the present invention.
Figure 3 is a schematic view of a component of the apparatus in Figure 2.

### DETAILED DESCRIPTION

The present invention provides a method for treating a surface of a component in order to improve wear resistance, in particular to liquid droplet erosion and to erosion deriving from cavitation phenomena. Particularly, albeit not exclusively, the present invention is applied to components of rotating machines, e.g. steam turbines, centrifugal and axial compressors and pumps.

The method utilizes a high velocity spray technique to apply a coating of a ductile material on a surface of a component.

With reference to Figure 2, an apparatus for performing a method according to the present invention is indicated as a whole with the reference number 1. Apparatus 1 comprises an upstream duct 10 for connecting a gas source 15 of pressurized carrier gas to a first gas heater 20 and a powder feeder 30, both of conventional and known type and therefore not described in detail. The carrier gas is nitrogen or helium or other convenient inert gas. The carrier gas flows in the apparatus at a pressure comprised between 20 bar and 50 bar. The gas flow rate of the carrier gas is comprised between 2 m³/hour and 6 m³/hour.

The upstream duct 10 comprises a first main branch 11 connecting the gas source 15 to the first gas heater 20 and a secondary branch 12 departing from the first main branch 11 for connecting the gas source 15 to the powder feeder 30. Downstream the intersection the two branches 11, 12 of the upstream duct 10, the main branch 11 and secondary branch 12 respectively comprises a first and a second valve 13, 14 for regulation or stopping the flow of the carrier gas in the main branch 11 and secondary branch 12, respectively.

In the first gas heater 20 a first portion of the carrier gas is pre-heated up to a pre-heating temperature T1 comprised between 400 °C and 500 °C. Downstream the first gas heater 20 the pre-heated carrier gas flows in a first downstream duct 40 which connects the first gas heater 20 to a spray gun 60. Along the first downstream duct 40 the temperature of carrier gas decreases down to a release temperature T2, in the section immediately upstream the spray gun 60. Release temperature T2 is lower than the pre-heating temperature T1 and comprised between 350 °C and 450 °C.

In the powder feeder 30 a second portion of the carrier gas flowing from the second branch 12 of the upstream duct 10 is mixed with a spray powder of a ductile material having a composition including a mass percentage of Co comprised between 15% and 70%. For example, ductile materials which can be used in the spray powder according to the present invention include: stellite^{®} 6, stellite^{®} 12, stellite^{®} 21, and materials defined in US6986951.

Downstream of the powder feeder 30 the mixture of carrier gas and spray powder flows in a second downstream duct 50 which connects the powder feeder 30 to the spray gun 60.

The spray gun 60 extends along a longitudinal axis X and comprises a final heater 61 and a supersonic nozzle 62, which is connected to the final heater 61, downstream thereof. In operation the spray gun 60 is housed within a spray enclosure 70 together with the surface of the component C on which a coating S of spray material is to be sprayed. The surface to be sprayed is positioned in the enclosure 70 perpendicularly to the longitudinal axis X.

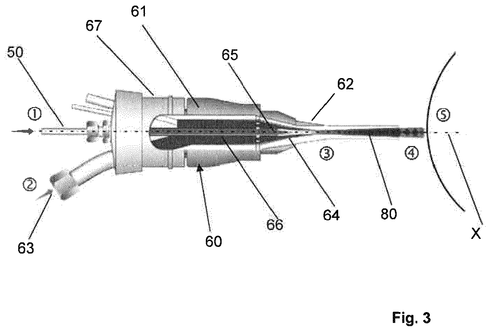

With reference to Figure 3, the final heater 61 comprises an outer housing 67 and a heating chamber 66, which extends along the longitudinal axis X from an inlet section 63 which is connected to the first downstream duct 40 to an outlet section 64, immediately upstream to the supersonic nozzle 62. The carrier gas from the first downstream duct 40 flows through the heating chamber 66 from the inlet section 63 to the outlet section 64. In the heating chamber 66 the carrier gas is heated again up to a spray temperature T3 higher than the release temperature T2 and comprised between 550 °C and 800 °C. The final downstream portion of the second downstream duct 50 is coaxial with the longitudinal axis X and passes through the heating chamber 66 up to a final section 65, immediately upstream the supersonic nozzle 62. The outlet section 64 of the heating chamber 66 encircles annularly the final section 65 of second downstream duct 50. When exiting the final heater 61, i.e., respectively, the heating chamber 66 and the last downstream portion of the second downstream duct 50, the re-heated first portion of carrier gas and the mixture of powder and second portion of carrier gas mix together to form a spray jet 80 and enter the supersonic nozzle 62.

In the supersonic nozzle 62 the spray jet 80 expands and the powder particle reaches a velocity v. Through the supersonic nozzle 62 the spray jet 80 is directed towards the surface on the component C in order to create the coating S. Values of velocity v are, typically: greater than 300 m/s, when the carrier gas is nitrogen, greater than 1000 m/s, when the carrier gas is helium,

Efficiency of deposit is typically greater than 80%.

In the deposited coating S, the following mechanical properties can be achieved:
Hardness (Vickers): 400<HV<1000, Porosity: < 2%.

## Claims

1. A high velocity spray method for treating the surface of a component (C) of a rotating machine in order to improve the wear resistance of the component (C), the method comprising the steps of:
heating a first portion of an inert gas up to a spray temperature (T₃);
preparing a powder of a ductile material having a composition including Co at a mass percentage comprised between 15% and 70%;
preparing a mixture of said powder material and a second portion of inert gas;
mixing said first portion of the inert gas and said mixture in a spray gun (60) in order
to create a spray jet (80); and
directing said spray jet (80) towards said surface in order to deposit a coating (S) of said material;
**characterized in** further steps of:
preceding said step of heating by a pre-heating step in which said first portion of inert gas is pre-heated up to a pre-heating temperature (T₁) lower than said spray temperature (T₃) and comprised between 400 °C and 500 °C; and
performing said step of heating in a final heater (61) of the spray gun (60) up to a temperature comprised between 550 °C and 800 °C.

2. The method according to claim 1, wherein said inert gas is nitrogen and/or helium.

3. The method according to any preceding claim, wherein the pressure of said inert gas upstream said spray jet is comprised between 2 × 10⁶ and 5 × 10⁶ Pa (20 bar and 50 bar).

4. The method according to any preceding claim, wherein said component (C) is a steam turbine blade.

## Patentansprüche

1. Hochgeschwindigkeitssprühverfahren zum Behandeln der Oberfläche einer Komponente (C) einer rotierenden Maschine, um die Verschleißfestigkeit der Komponente (C) zu verbessern, das Verfahren umfassend die Schritte:
Erhitzen eines ersten Abschnitts eines Inertgases auf eine Sprühtemperatur (T₃);
Herstellen eines Pulvers aus einem duktilen Material mit einer Zusammensetzung, die Co in einem Massenanteil zwischen 15 % und 70 % einschließt;
Herstellen einer Mischung aus dem Pulvermaterial und einem zweiten Abschnitt des Inertgases;
Mischen des ersten Abschnitts des Inertgases und der Mischung in einer Sprühpistole (60), um einen Sprühstrahl (80) zu erzeugen; und
Richten des Sprühstrahls (80) auf die Oberfläche, um eine Beschichtung (S) aus dem Material aufzutragen;
**gekennzeichnet durch** die weiteren Schritte:
vor dem Schritt des Erhitzens erfolgt ein Vorheizschritt, wobei der erste Abschnitt des Inertgases auf eine Vorheiztemperatur (T₁) vorgewärmt wird, die niedriger als die Sprühtemperatur (T₃) ist und zwischen 400 °C und 500 °C liegt; und
Durchführen des Schritts des Erhitzens in einem Endheizer (61) der Sprühpistole (60) bis zu einer Temperatur, die zwischen 550 °C und 800 °C liegt.

2. Verfahren nach Anspruch 1, wobei das Inertgas Stickstoff und/oder Helium ist.

3. Verfahren nach einem der vorstehenden Ansprüche, wobei der Druck des Inertgases stromaufwärts des Sprühstrahls zwischen 2 × 10⁶ und 5 × 10⁶ Pa (20 bar und 50 bar) liegt.

4. Verfahren nach einem der vorstehenden Ansprüche, wobei die Komponente (C) eine Dampfturbinenschaufel ist.

## Revendications

1. Procédé de pulvérisation à grande vitesse pour traiter la surface d'un composant (C) d'une machine rotative afin d'améliorer la résistance à l'usure du composant (C), le procédé comprenant les étapes consistant à :
chauffer une première partie d'un gaz inerte jusqu'à une température de pulvérisation (T₃) ;
préparer une poudre d'un matériau ductile ayant une composition incluant du Co à un pourcentage massique compris entre 15 % et 70 % ;
préparer un mélange dudit matériau en poudre et d'une deuxième partie de gaz inerte ;
mélanger ladite première partie du gaz inerte et ledit mélange dans un pistolet de pulvérisation (60) pour créer un jet de pulvérisation (80) ; et
diriger ledit jet de pulvérisation (80) vers ladite surface pour déposer un revêtement (S) dudit matériau ;
**caractérisé en** des étapes supplémentaires consistant à :
faire précéder ladite étape de chauffage par une étape de préchauffage dans laquelle ladite première partie de gaz inerte est préchauffée jusqu'à une température de préchauffage (T₁) inférieure à ladite température de pulvérisation (T₃) et comprise entre 400 °C et 500 °C ; et
mettre en œuvre ladite étape de chauffage dans un élément chauffant final (61) du pistolet de pulvérisation (60) jusqu'à une température comprise entre 550 °C et 800 °C.

2. Procédé selon la revendication 1, dans lequel ledit gaz inerte est de l'azote et/ou de l'hélium.

3. Procédé selon une quelconque revendication précédente, dans lequel la pression dudit gaz inerte en amont dudit jet de pulvérisation est comprise entre 2 × 10⁶ et 5 × 10⁶ Pa (20 bar et 50 bar).

4. Procédé selon une quelconque revendication précédente, dans lequel ledit composant (C) est une aube de turbine à vapeur.
